# EUROPEAN PATENT SPECIFICATION

(11) **EP 2 339 094 B1**
(45) Date of publication and mention of the grant of the patent: **15.06.2016**
(21) Application number: 09306323.8
(22) Date of filing: 23.12.2009
(51) Int. Cl.: E04H 12/16, E04H 12/34, F03D 13/20

(54) **Tower having a pre-stressed concrete column and construction method**
Turm mit vorgespannter Betonsäule und Bauverfahren
Tour doté d'une colonne en béton précontrainte et procédé de construction

(43) Date of publication of application: 29.06.2011
(73) Proprietor: SOLETANCHE FREYSSINET, 92500 Rueil Malmaison (FR)
(72) Inventor: Huynh Tong, Alain, 92120 Montrouge (FR); Melen, Benoît, 92270 Bois Colombes (FR)
(74) Representative: Cabinet Plasseraud

(56) References cited:
- EP-A1- 1 211 350
- EP-A2- 1 262 614
- DE-A1- 4 408 043
- US-B1- 6 578 329

## Description

### BACKGROUND OF THE INVENTION

The present invention relates to the construction of towers or masts having a pre-stressed wall.

Most existing concrete towers are pre-stressed using metallic armatures threaded in a duct injected with cement grout. A shortcoming of this method is the sensitivity of the grout to freezing when it is injected and hardened. This makes the injection steps very tricky when the ambient temperature is below +5 °C approximately. Usually, internal pre-stressing is used, i.e. the duct containing the armatures extends within the concrete of the tower wall. This can give rise to difficulties to thread the armatures and to ensure proper sealing of the duct when injecting the grout (see, e.g. US patent No. 7,114,295).

Certain towers, in particular for wind generators, have a concrete column fitted with external pre-stressing cables having armatures made of strands which can slide in individual jackets without cement grout injection. An example is disclosed in European patent No. 1 262 614. A drawback of this kind of armature is the important differential displacement which can take place between the metallic strand and its plastic jacket due to the difference in their thermal expansion coefficients (by a factor of 10 or more between plastic and steel). It is then necessary to take special measures, particularly when the cables are long and the range of temperature variation is large, in order to avoid damage to the jackets when they expand too much or exposure of the metallic strands to corrosion when the jackets retract too much.

In general, installing pre-stressing cables for the annular wall of a concrete tower is a fairly complex operation. It is desirable to make it simpler and to be able to perform it in various weather conditions which can be experienced in this kind of construction site. Such simplification increases productivity, which is of particular interest when a number of towers must be built, for example in the case of windmill farms.

The present document introduces a technique which alleviates or at least reduces the impact of the above discussed difficulties.

It is proposed a method of building a tower, comprising:
- erecting a column having an annular wall surrounding an inner space, with abutment portions provided at upper and lower parts of the column;
- pre-assembling pre-stressing cables comprising tendons and two cable terminations, each tendon being contained in a respective jacket with a protective substance, each cable termination comprising a block for anchoring each tendon of a pre-stressing cable, a chamber filled with a protective substance on a rear side of said block and a sealing system closing the chamber opposite the block, each tendon of said pre-stressing cable extending through the sealing system and having its jacket interrupted in said chamber;
- installing the pre-assembled pre-stressing cables in the inner space of the column by distributing them along the annular wall, the two terminations of each cable bearing against abutment portions at the upper and lower parts of the column; and
- tensioning the pre-stressing cables.

Pre-assembling the pre-stressing cables makes it possible to perform at ground level a major part of the operations necessary to install the pre-stressing cables. The cable terminations are pre-equipped with the tendons and with the sealing systems providing protection of the bare ends of the tendons.

Preferably, each tendon includes a strand of metal wires lubricated mutually and with the jacket of the tendon by the protective substance, and the jacket is coupled longitudinally with the strand so as to follow macroscopic deformations of the strand. This significantly limits the differences of lengthening between the metallic strand and its jacket, even in the presence of important temperature variations. This results in better durability of the jackets and better efficiency of the sealing systems. In particular, the protective substance contained in the jackets of the tendons and/or in the chambers of the cable terminations can be wax. An advantage of this type of substance is that it can easily be made malleable by heating when installing the pre-assembled cables and tensioning them.

The jackets of the tendons can be left exposed to the environment between the cable terminations. Steps of installing and injecting a collective sheath for the tendons of a pre-stressing cable inside the column are then dispensed with and the installation is simplified. Further simplification is obtained when the tendons of the tensioned cable extend freely between its two terminations.

For a relatively simple installation of a pre-assembled pre-stressing cable, it is possible to proceed as follows: lifting the cable to bring one of its terminations near an abutment portion located at the upper part of the column; introducing the anchoring block of said termination through a hole provided in said abutment portion; and connecting a ring to said anchoring block and applying said ring against the abutment portion around said hole.

Another aspect of the invention relates to a tower comprising a column having an annular wall surrounding an inner space, abutment portions located at upper and lower parts of the column, and pre-stressing cables distributed them along the annular wall and extending along the column in the inner space. Each pre-stressing cable comprises at least one tendon and two cable terminations cooperating with abutment portions at upper and lower parts of the column. Each cable termination comprises an anchoring block, a chamber filled with wax on a rear side of said block and a sealing system closing the chamber opposite the block. Each tendon is contained with wax as a protective substance in a respective jacket extending through the sealing system of a cable termination at each end of the tendon and interrupted in the chamber of said termination to let the tendon be held in the anchoring block.

Other features and advantages of the method and tower disclosed herein will become parent from the following description of non-limiting embodiments, with reference to the appended drawings.

### BRIEF DESCRIPTION THE DRAWINGS

Figure 1 is a schematic sectional view of a concrete tower.
Figure 2 is a cross-sectional view of a tendon which can be used in a cable to pre-stress the concrete tower.
Figure 3 is an axial sectional view of a cable termination of the pre-stressing cable.

### DESCRIPTION OF PREFERRED EMBODIMENTS

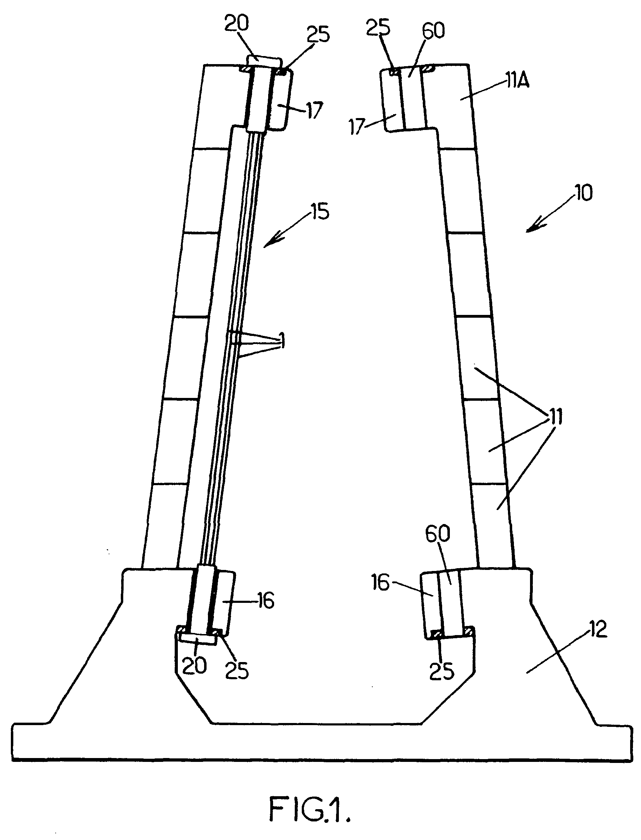

Figure 1 illustrates the principle of a tower structure comprising a concrete column 10. The dimensions and proportions shown in the drawing are not accurate. The wall of the column 10 is made of a plurality of concrete segments 11 stacked above a base 12. The base 12 is for example made of reinforced concrete.

The wall of the column 10 surrounds an inner space, each segment 11 having an annular shape. The cross-section of the column can be polygonal, circular, elliptical, polygonal with rounded corners, etc. In the illustration, the cross-section is reduced from the bottom to the top of the column 10. Each segment 11 can be made of a plurality of concrete elements juxtaposed and bonded together along the circumference of the column. A bonding material such as cement or resin is also present at the horizontal interface between two adjacent segments 11.

Pre-stressing cables 15 are placed along the concrete wall in the inner space and are thus invisible from outside the tower. The pre-stressing cables 15 are used to hold the concrete elements together and to ensure resistance of the tower to bending forces. They extend substantially over the height of the column 10 between a lower anchoring region 16 and an upper anchoring region 17. In the illustrated embodiment, the lower anchoring regions 16 belong to the base 12 and the uppermost concrete segment 11 A of the column 10 has a special shape to include the upper anchoring regions 17. It will be appreciated that alternative arrangements of the anchoring regions at the lower and upper parts of the column 10 are also possible.

Pre-stressing cables 15 are distributed along the circumference of the annular wall of the column 10 (only one cable 15 is shown in the left-hand part of figure 1). The number and distribution of the cables 15 and the number and size of the tendons 1 of such cables are determined by structure design calculation prior to erecting the column.

Each pre-stressing cable 15 comprises a plurality of tendons 1 (though there could be only one tendon per cable in principle) and two cable terminations 20 shown diagrammatically in figure 1. The two terminations 20 of a cable 15 bear against respective abutment portions 25 located at the upper and lower parts of the column 10. In the illustrated example, the abutment portions 25 are part of the upper anchoring regions 16, 17 and they are provided as metal plates embedded in the concrete of the base 12 and of the uppermost concrete segment 11 A.

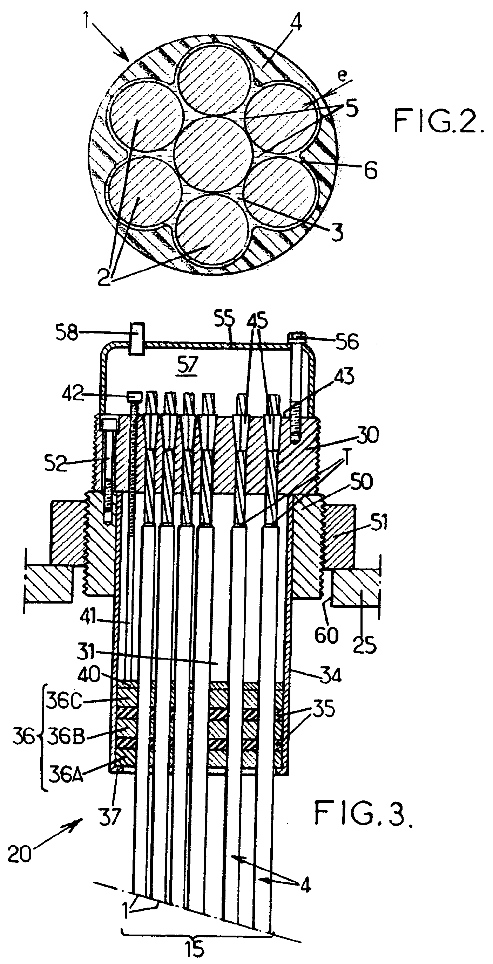

The tendons 1 of the pre-stressing cables 15 may be of the kind illustrated in figure 2, with a strand of seven steel wires surrounded by an individual plastic jacket 4, for example made of a high-density polyethylene (HDPE). A corrosion-protective substance 3 is contained with the strand in the jacket 4 in order to lubricate the contacts between the wires 2 and the jacket 4.

Preferably, the tendon 1 is dimensioned such that the jacket 4 is coupled longitudinally with the strand. This means that even though microscopic displacements between the wires 2 and the jacket 4 are facilitated by the lubricant 3, the jacket is forced to follow macroscopic deformations of the strand. This macroscopic property is useful to avoid significant differences in the lengthening of the strands 2 and their jackets 4 when the ambient temperature fluctuates. It results from the helical ribs present in the inner face of the jacket, which penetrate the helical grooves formed between the adjacent peripheral wires of the strand. Cooperation between these ribs and these grooves allows matching of the macroscopic deformations. The amount of protective substance 3 is adjusted so that this penetration is not too great, which might cause locking of the jacket onto the wires by shape adhesion and hence generate shear stress in the jacket. The structure and manufacture of such "semi-adherent" strands can be as disclosed in European patent No. 1 211 350. The amount of pliant corrosion-protective substance 3 per unit of length of the tendon is adjusted so that it fills the interstices defined by the wires 2 inside the jacket 4, namely six internal interstices 5 and a peripheral interstice 6 lying between the peripheral wires of the strand and the inner face of its jacket 4. The thickness e of the peripheral interstice 6 is at least 0.05 mm to ensure proper lubrication and limited, depending on the size of the wires, to ensure the above-mentioned macroscopic property.

Each of the cable terminations 20 includes an anchoring block 30, a chamber 31 filled with a corrosion-protective substance and a sealing system 32 closing the chamber opposite the block (figure 3). The chamber 31 is delimited at a first axial end by the inner face of the anchoring block 30, transversely by a rigid tube 34 connected to the inner face of the anchoring block 30 and at the opposite axial end to the block 15, by the sealing system 32.

In the illustrated example, the sealing system 36 is in the form of a stuffing-box through which the jacketed tendons 1 pass in a sealed way and which is pressed in a sealed way against the inner face of the tube 34 due to axial compression. The sealing system 36 has a plurality of parallel rigid discs 36A-C perforated according to a pattern corresponding to the arrangement of the tendons 1 in the cross-section of the cable 15. Those discs 36A-C can slide axially within the tube 34. Sealing cushions 35 of elastomeric material having a matching pattern of perforations are sandwiched between the discs 36A-C and compressed to ensure the sealing action around the plastic jackets of the tendons and along the inner face of the rigid tube 34. The outermost disc 36A, located at the end of the tube 34 facing toward the main length of cable, is in a fixed position by being in abutment against a return 37 formed at the end of the tube 22. The other discs 36B-C hold the cushions 35 in compression to cause their edges to expand and produce the desired sealing. For this purpose, control means cooperate with the innermost disc 36C closest to the chamber 31. In the embodiment depicted in figure 3, the control means comprise a ring 40 which is pressed against the innermost disc 36C and threaded rods 41 (just one being depicted in figure 3). A first end of the threaded rods 41 presses against the ring 40 while the second end of the rods 41 pass through respective tapped hole formed in the anchoring block 31. Each threaded rod 41 has a head 42 projecting from the outer face 43 of the anchoring block 30. The threaded rods 41 can be operated by means of their heads 42 to be screwed through the tapped hole, thereby controlling pressing of the discs 36A-C to obtain the sealing action. It will be noted that other designs of the sealing system and its control arrangement can be used.

In order to anchor the tendons 1 of the pre-stressing cable 15, their jackets 4 are cut to be interrupted within the chamber 31 of the cable termination 20, as indicated by reference sign T in figure 3. The bare strands at the end of the tendons 1 are held firmly in the anchoring block 30, for example by means of frusto-conical jaws 45 engaging complementary holes provided in block 30.

An adjusting tube 50 is secured to the outside of the rigid tube 34, near the end of this tube adjacent to the anchoring block 30. A bearing ring 51 in the form of a nut is attached by screwing onto a complementary screw thread formed on the periphery of the adjusting tube 50. The nut 51 bears axially against the annular bearing surface forming part of the abutment portion 25 receiving the cable termination 20. The adjusting tube 50 is, for example, welded or screwed onto the tube 34 while the anchoring block 30 is screwed onto the adjusting tube 50 using screws 52 which are accessible from the outside face of the anchoring block.

Furthermore, a cap 55 is sealed onto the outer face 43 of the perforated block 15 and is held thereon using screws 56. The cap 55 delimits a chamber 57 in which the ends of the bared portions of the strands are situated, and which contains a flexible substance protecting these ends against corrosion.

The chamber 57 is filled with the protective substance through an orifice 58 provided in the cap 55. The chamber 57 communicates with the chamber 31 via passages (not shown) formed in the anchoring block 30. Once the tendons 1 have been fixed to the cable termination 20, once compression has been exerted on the ring 40 using the threaded rods 41, and once the cap 45 has been sealingly fixed to the anchoring block 30, the two chambers 31 and 57 are filled with the protective substance through the orifice 58 which afterwards is closed with a plug.

Thus, the metallic strands 2 are in contact with a corrosion-protective substance all over their length, namely in the jackets 4 over the major part of the length and in the chambers 31, 57 at the two terminations mounted at the cable ends.

In the building method proposed here, the pre-stressing cables 15 are assembled prior to being installed in the erected concrete column 10. The pre-assembling can be performed on the ground. If the outside temperature is low (too low to easily manipulate the components of the cables, in particular the protective substances), a heated enclosure can be provided to facilitate the work, this being very difficult if not impossible if the mounting is done at the top of the column 10 which can be at a height of the order of 100 m.

In an embodiment, the pre-assembling of a pre-stressing cable 15 comprises all or some of the following stages :
- cutting the tendons 1 at the required length and, at both ends of the cable: exposing the required length of the metallic strands
- introducing the tendons 1 into the chamber 31 through the sealing system 32 of a cable termination 20; - and introducing them into the anchoring block 30 of the cable termination;
- fixing the block 30 to the adjusting tube 50 using the screws 52;
- fixing the strands to the anchoring block 30 using jaws 45;
- activating the sealing system 32, e.g. by screwing the threaded rods 41;
- putting the cap 55 in place and filling the chambers 31, 57 with the flexible protective substance.

At this stage, the cable terminations 20 are completed except for the bearing nut 51.

Each abutment portion 25 has a central hole 60 which, as shown in figure 1, extends through the anchoring region 16, 17 at the lower or upper part of the column 10. As shown in figure 3, the hole 60 has a cross-section larger than the outer cross-section of the anchoring block 30. It is also larger than the outer cross-sections of the tubes 34 and 50. However, it is smaller than the outer cross-section of the bearing nut 51.

The pre-assembled pre-stressing cable 15 is lifted to bring one of its terminations 20 near the abutment portion 25 located at the upper part of the column 10. Then the cable termination is inserted into the hole 60 through the upper anchoring region 17 and the abutment portion 25. At this point, the bearing nut 51 is threaded around the adjusting tube 50 and applied against the abutment portion 25 around the hole 60.

Likewise, the other cable termination 20 is inserted into the hole 60 through the lower anchoring region 17 and its bearing nut 51 is mounted to fix the lower end of the pre-stressing cable 15.

Finally, the cable 15 is tensioned. This can be done by pulling the anchor block 30 and screwing the bearing nut(s) 51 at one or both of the cable terminations 20.

The protective substance 3 within the jackets 4 of the strands is preferably petroleum wax. If the ambient temperature is low, this substance can be made fluid by heating the cable when it is manipulated, in particular when it is unrolled to be lifted and attached to the upper part of the column. The thermal conductivity of the steel wires 2 helps softening the wax along the cable. Wax is also preferably used as the corrosion-protective substance injected in the cable terminations 20.

In the embodiment illustrated by figure 1, there is no collective sheath around the tendons 1 making up a pre-stressing cable 15 between its two terminations 20. The jackets 4 of the tendons 1 provide sufficient protection against corrosion and can thus be left exposed to the environment between the two cable terminations 20. Also, the tendons 1 of the tensioned cable 15 can extend freely between the two cable terminations 20. Thus, it is not necessary to provide attachment of the tendons to the inner face of each concrete segment 11.

It will be appreciated that the embodiment described above is an illustration of the invention disclosed herein and that various modifications can be made without departing from the scope as defined in the appended claims.

## Claims

1. A method of building a tower, comprising:
- erecting a hollow column (10) having a wall surrounding an inner space, with abutment portions (25) provided at upper and lower parts of the column;
- pre-assembling pre-stressing cables (15) comprising tendons (1) and two cable terminations (20), each tendon being contained in a respective jacket (4) with a protective substance (3), each cable termination comprising a block (30) for anchoring each tendon of a pre-stressing cable, a chamber (31) filled after tensioning the pre-stressing cables with a protective substance on a rear side of said block and a sealing system (36) closing the chamber opposite the block, each tendon of said pre-stressing cable extending through the sealing system and having its jacket interrupted in said chamber;
- installing the pre-assembled pre-stressing cables in the inner space of the hollow column, the two terminations of each cable bearing against abutment portions at the upper and lower parts of the column; and
- tensioning the pre-stressing cables.

2. The method as claimed in claim 1, wherein each tendon (1) includes a strand of metal wires (2) lubricated mutually and with the jacket (4) of the tendon by the protective substance (3), the jacket being coupled longitudinally with the strand so as to follow macroscopic deformations of the strand.

3. The method as claimed in any one of the preceding claims, wherein the protective substance (3) contained in the jackets of the tendons is wax.

4. The method as claimed in any one of the preceding claims, wherein the protective substance contained in the chambers (31) of the cable terminations (20) is grease or wax.

5. The method as claimed in any one of the preceding claims, wherein the jackets (4) of the tendons (1) of a tensioned cable (15) are exposed to the environment between the two terminations (20) of said cable.

6. The method as claimed in any one of the preceding claims, wherein the tendons (1) of a tensioned cable (15) extend freely between the two terminations (20) of said cable.

7. The method as claimed in any one of the preceding claims, wherein the installation of the pre-assembled pre-stressing cables (15) comprises:
- lifting the cable to bring one of its terminations (20) near an abutment portion (25) located at the upper part of the column (10);
- introducing the anchoring block (30) of said termination through a hole (60) provided in said abutment portion; and
- connecting a ring (51) to said anchoring block (30) and applying said ring against the abutment portion around said hole.

8. A tower comprising:
- a hollow column (10) having a wall surrounding an inner space;
- abutment portions (25) located at upper and lower parts of the column; and
- pre-stressing cables (15) extending along the column in the inner space, wherein each pre-stressing cable comprises at least one tendon (1) and two cable terminations (20) bearing against abutment portions (25) at upper and lower parts of the column,
wherein each cable termination comprises an anchoring block (30), **characterised in that** each cable termination further comprises a chamber (31) filled with grease or wax on a rear side of said block and a sealing system (36) closing the chamber opposite the block,
each tendon being contained with wax as a protective substance (3) in a respective jacket (4) extending through the sealing system of a cable termination at each end of the tendon and interrupted in the chamber of said termination to let the tendon be held in the anchoring block.

9. The tower as claimed in claim 8, wherein each tendon (1) includes a strand of metal wires (2) lubricated mutually and with the jacket (4) of the tendon by the protective wax (3), the jacket being coupled longitudinally with the strand so as to follow macroscopic deformations of the strand.

10. The tower as claimed in claim 8 or 9, wherein the jackets (4) of the tendons (1) of a pre-stressing cable (15) are exposed to the environment between the two terminations (20) of said cable.

11. The tower as claimed in any one of claims 8 to 10, wherein the tendons (1) of a pre-stressing cable (15) extend freely between the two terminations (20) of said cable.

12. The tower as claimed in any one of claims 8 to 11, wherein an abutment portion (25) receiving a cable termination (20) includes a hole (60) having a cross-section larger than an outer cross-section of the anchoring block (30) of said cable termination, the cable termination further comprising a ring (51) connected to the anchoring block and applied against the abutment portion around said hole.

## Patentansprüche

1. Verfahren zum Bauen eines Turms, mit den Schritten;
Aufrichten einer Hohlsäule (10) mit einer einen Innenraum umschließenden Wand, wobei an einem oberen und an einem unteren Abschnitt der Säule Widerlagerabschnitte (25) bereitgestellt werden;
Vormontieren von Vorspannkabeln (15), die Spannglieder (1) und zwei Kabelendstücke (20) aufweisen, wobei jedes Spannglied in einer entsprechenden Ummantelung (4) mit einer Schutzsubstanz (3) aufgenommen ist, wobei jedes Kabelendstück einen Block (30) zum Verankern jedes Spannglieds eines Vorspannkabels, eine Kammer (31), die nach dem Spannen der Vorspannkabel mit einer Schutzsubstanz auf einer Rückseite des Blocks gefüllt wird, und ein Dichtungssystem (36) aufweist, das die Kammer gegenüberliegend dem Block verschließt, wobei jedes Spannglied des Vorspannkabels sich durch das Dichtungssystem erstreckt und seine Ummantelung in der Kammer unterbrochen ist;
Installieren der vormontierten Vorspannkabel im Innenraum der Hohlsäule, wobei die zwei Endstücke jedes Kabels an den Widerlagerabschnitten am oberen und am unteren Abschnitt der Säule anliegen; und
Spannen der Vorspannkabel.

2. Verfahren nach Anspruch 1, wobei jedes Spannglied (1) einen Strang von Metalldrähten (2) aufweist, die wechselseitig und bezüglich der Ummantelung (4) des Spannglieds durch die Schutzsubstanz (3) geschmiert sind, wobei die Ummantelung in der Längsrichtung mit dem Strang verbunden ist, so dass sie makroskopischen Verformungen des Strangs folgt.

3. Verfahren nach einem der vorangehenden Ansprüche, wobei die in den Ummantelungen der Spannglieder enthaltene Schutzsubstanz (3) Wachs ist.

4. Verfahren nach einem der vorangehenden Ansprüche, wobei die in den Kammern (31) der Kabelendstücke (20) enthaltene Schutzsubstanz Fett oder Wachs ist.

5. Verfahren nach einem der vorangehenden Ansprüche, wobei die Ummantelungen (4) der Spannglieder (1) eines gespannten Kabels (15) zwischen den beiden Endstücken (20) des Kabels zur Umgebung freiliegen.

6. Verfahren nach einem der vorangehenden Ansprüche, wobei die Spannglieder (1) eines gespannten Kabels (15) sich zwischen den beiden Endstücken (20) des Kabels frei erstrecken.

7. Verfahren nach einem der vorangehenden Ansprüche, wobei das Installieren der vormontierten, vorgespannten Kabel (15) die Schritte aufweist:
Anheben des Kabels, um eines seiner Endstücke (20) in die Nähe eines am oberen Abschnitt der Säule (10) angeordneten Widerlagerabschnitts (25) zu bringen;
Einführen des Verankerungsblocks (30) des Endstücks durch ein im Widerlagerabschnitt ausgebildetes Loch (60); und
Verbinden eines Rings (51) mit dem Verankerungsblock (30) und Anbringen des Rings gegen den Widerlagerabschnitt um das Loch.

8. Turm mit:
einer Hohlsäule (10) mit einer einen Innenraum umschließenden Wand;
Widerlagerabschnitten (25), die an einem oberen und an einem unteren Abschnitt der Säule angeordnet sind; und
Vorspannkabeln (15), die sich entlang der Säule im Innenraum erstrecken,
wobei jedes Vorspannkabel mindestens ein Spannglied (1) und zwei Kabelendstücke (20) aufweist, die an den Widerlagerabschnitten (25) am oberen und am unteren Abschnitt der Säule anliegen,
wobei jedes Kabelendstück einen Verankerungsblock (30) aufweist;
**dadurch gekennzeichnet, dass**
jedes Kabelendstück ferner eine auf der Rückseite des Blocks mit Fett oder Wachs gefüllte Kammer (31) und ein die Kammer gegenüberliegend dem Block verschließendes Dichtungssystem (36) aufweist; und
jedes Spannglied mit Wachs als eine Schutzsubstanz (3) in einer Ummantelung (4) aufgenommen ist, die sich durch das Dichtungssystem eines Kabelendstücks an jedem Ende des Spannglieds erstreckt und in der Kammer des Endstücks unterbrochen ist, um zu veranlassen, dass das Spannglied im Verankerungsblock gehalten wird.

9. Turm nach Anspruch 8, wobei jedes Spannglied (1) einen Strang von Metalldrähten (2) aufweist, die wechselseitig und bezüglich der Ummantelung (4) des Spannglieds durch das Schutzwachs (3) geschmiert sind, wobei die Ummantelung in der Längsrichtung mit dem Strang verbunden ist, so dass sie makroskopischen Verformungen des Strangs folgt.

10. Turm nach Anspruch 8 oder 9, wobei die Ummantelungen (4) der Spannglieder (1) eines Vorspannkabels (15) zwischen den beiden Endstücken (20) des Kabels zur Umgebung freiliegen.

11. Turm nach einem der Ansprüche 8 bis 10, wobei die Spannglieder (1) eines Vorspannkabels (15) sich zwischen den beiden Endstücken (20) des Kabels frei erstrecken.

12. Turm nach einem der Ansprüche 8 bis 11, wobei ein Widerlagerabschnitt (25), der ein Kabelendstück (20) aufnimmt, ein Loch (60) mit einem Querschnitt aufweist, der größer ist als ein Außenquerschnitt des Verankerungsblocks (30) des Kabelendstücks, und wobei das Kabelendstück ferner einen Ring (51) aufweist, der mit dem Verankerungsblock verbunden ist und gegen den Widerlagerabschnitt um das Loch herum angebracht wird.

## Revendications

1. Procédé de construction d'une tour, comprenant :
- dresser une colonne creuse (10) comportant une paroi entourant un espace intérieur, des parties formant butées (25) étant prévues dans des parties supérieure et inférieure de la colonne ;
- pré-assembler des câbles de précontrainte (15) comprenant des armatures (1) et deux terminaisons de câble (20), chaque armature étant contenue dans une gaine respective (4) avec une substance protectrice (3), chaque terminaison de câble comprenant un bloc (30) pour ancrer chaque armature d'un câble de précontrainte, une chambre (31) remplie après avoir tendu les câbles de précontrainte avec une substance protectrice sur un côté arrière dudit bloc et un système d'étanchéité (36) fermant la chambre à l'opposé du bloc, chaque armature dudit câble de précontrainte traversant le système d'étanchéité et ayant sa gaine interrompue dans ladite chambre ;
- installer les câbles de précontrainte pré-assemblés dans l'espace intérieur de la colonne creuse, les deux terminaisons de chaque câble prenant appui contre des parties formant butées dans les parties supérieure et inférieure de la colonne ; et
- mettre en tension les câbles de précontrainte.

2. Procédé selon la revendication 1, dans lequel chaque armature (1) comprend un toron de fils métalliques (2) lubrifiés mutuellement et avec la gaine (4) de l'armature par la substance protectrice (3), la gaine étant couplée longitudinalement avec le toron afin de suivre des déformations macroscopiques du toron.

3. Procédé selon l'une quelconque des revendications précédentes, dans lequel la substance protectrice (3) contenue dans les gaines des armatures est de la cire.

4. Procédé selon l'une quelconque des revendications précédentes, dans lequel la substance protectrice contenue dans les chambres (31) des terminaisons de câble (20) est de la graisse ou de la cire.

5. Procédé selon l'une quelconque des revendications précédentes, dans lequel les gaines (4) des armatures (1) d'un câble tendu (15) sont exposées à l'environnement entre les deux terminaisons (20) dudit câble.

6. Procédé selon l'une quelconque des revendications précédentes, dans lequel les armatures (1) d'un câble tendu (15) s'étendent librement entre les deux terminaisons (20) dudit câble.

7. Procédé selon l'une quelconque des revendications précédentes, dans lequel l'installation des câbles de précontrainte pré-assemblés (15) comprend :
- hisser le câble pour mettre une de ses terminaisons (20) près d'une partie formant butée (25) située à la partie supérieure de la colonne (10) ;
- introduire la bloc d'ancrage (30) de ladite terminaison à travers un trou (60) prévu dans ladite partie formant butée ; et
- relier une bague (51) audit bloc d'ancrage (30) et appliquer ladite bague contre la partie formant butée autour dudit trou.

8. Tour, comprenant :
- une colonne creuse (10) comportant une paroi entourant un espace intérieur ;
- des parties formant butées (25) situées dans des parties supérieure et inférieure de la colonne ; et
- des câbles de précontrainte (15) s'étendant le long de la colonne dans l'espace intérieur,
dans laquelle chaque câble de précontrainte comprend au moins une armature (1) et deux terminaisons de câble (20) prenant appui contre des parties formant butées (25) dans des parties supérieure et inférieure de la colonne,
dans laquelle chaque terminaison de câble comprend un bloc d'ancrage (30),
**caractérisée en ce que** chaque terminaison de câble comprend une chambre (31) remplie avec de la graisse ou de la cire sur un côté arrière dudit bloc et un système d'étanchéité (36) fermant la chambre à l'opposé du bloc,
chaque armature étant contenue avec une substance protectrice (3) dans une gaine respective (4) traversant le système d'étanchéité d'une terminaison de câble à chaque extrémité de l'armature et interrompue dans la chambre de ladite terminaison pour que l'armature puisse être tenue dans le bloc d'ancrage.

9. Tour selon la revendication 8, dans laquelle chaque armature (1) comprend un toron de fils métalliques (2) lubrifiés mutuellement et avec la gaine (4) de l'armature par la cire protectrice (3), la gaine étant couplée longitudinalement avec le toron afin de suivre des déformations macroscopiques du toron.

10. Tour selon l'une quelconque des revendications 8 ou 9, dans laquelle les gaines (4) des armatures (1) d'un câble de précontrainte (15) sont exposées à l'environnement entre les deux terminaisons (20) dudit câble.

11. Tour selon l'une quelconque des revendications 8 à 10, dans laquelle les armatures (1) d'un câble de précontrainte (15) s'étendent librement entre les deux terminaisons (20) dudit câble.

12. Tour selon l'une quelconque des revendications 8 à 11, dans laquelle une partie formant butée (25) recevant une terminaison de câble (20) comprend un trou (60) comportant une section transversale supérieure à une section transversale extérieure du bloc d'ancrage (30) de ladite terminaison de câble, la terminaison de câble comprenant en outre une bague (51) reliée au bloc d'ancrage et appliquée contre la partie formant butée autour dudit trou.
